# FASCICULE DE BREVET EUROPEEN

(11) **EP 0 596 806 B1**
(45) Date de publication et mention de la délivrance du brevet: **05.02.1997**
(21) Numéro de dépôt: 93402711.1
(22) Date de dépôt: 04.11.1993
(51) Int. Cl.: H05B 41/38, H05B 41/29, B60Q 1/14

(54) **Circuit d'alimentation et de commutation pour un projecteur pour véhicule mettant en oeuvre alternativement deux lampes à décharge**
Schaltung zum Betreiben und zum Ein/Aus Schalten eines Fahrzeugscheinwerfers, die abwechselnd zwei Entladungslampen steuert
Circuit for operating and switching alternately two discharge lamps in a vehicle headlamp

(30) Priorité: 06.11.1992 FR 9213422
(43) Date de publication de la demande: 11.05.1994
(73) Titulaire: VALEO VISION, 93012 Bobigny Cédex (FR)
(72) Inventeur: Albou, Pierre, F-75013 Paris (FR); Goncalves, Manuel, F-80090 Amiens (FR)
(74) Mandataire: Lemaire, Marc

(56) Documents cités:
- EP-A- 0 443 795
- DE-A- 4 132 299
- FR-A- 2 653 531

## Description

La présente invention concerne un circuit d'amorçage et de commutation d'un ensemble de deux ou plusieurs lampes à décharge, par exemple pour la commande des fonctions code/route dans le domaine de l'éclairage automobile.

Les circuits d'alimentation de lampes à décharges connus dans l'art antérieur comportent un convertisseur moyenne tension et un générateur d'impulsions pour l'amorçage de la lampe à décharge.

En particulier, le brevet français n° 2674722 de la demanderesse décrit un procédé et un circuit d'alimentation et d'amorçage d'une lampe à décharge permettant l'amorçage à chaud de la lampe dans la période qui suit l'extinction de la lampe après un régime permanent.

Dans les circuits de l'art antérieur, chacune des lampes comporte son propre circuit d'alimentation, ou pour le moins son propre circuit d'amorçage, ce qui est peu satisfaisant sur le plan économique.

L'invention vise à réduire le prix de revient des circuits d'alimentation et d'amorçage et à augmenter la fiabilité de l'alimentation sans recourir à des composants coûteux tels que des interrupteurs Haute-Tension.

Dans le domaine de l'éclairage automobile, la fiabilité est particulièrement importante pour des raisons de sécurité. Il est en particulier exclu de mettre en oeuvre des solutions ne garantissant pas de façon certaine l'allumage d'une des lampes après une période d'extinction.

A cet effet, l'invention concerne plus particulièrement un circuit d'alimentation et de commutation pour un ensemble constitué d'au moins deux lampes à décharge, notamment pour la commande code/route de projecteurs pour véhicule, comportant un convertisseur moyenne tension et un générateur d'impulsions pour l'amorçage d'une lampe à décharge, ainsi que des moyens de commutation, caractérisé en ce que chacune des lampes à décharge est reliée à une source d'alimentation moyenne tension unique par l'intermédiaire de l'enroulement secondaire d'un transformateur élévateur dont le circuit primaire est relié à un multiplicateur de tension unique par l'intermédiaire d'un moyen de sélection.

Le circuit d'alimentation et d'amorçage selon l'invention permet d'éviter le dédoublement du convertisseur de tension et du générateur d'impulsions, et de mettre en oeuvre un moyen de sélection, par exemple des interrupteurs de commande, basse tension, les tensions à leur bornes correspondant à la tension d'amorçage divisée par le rapport de transformation des transformateurs.

Selon une première variante, chacune des lampes à décharge est reliée à une source d'alimentation moyenne tension unique, par l'intermédiaire de l'enroulement secondaire d'un transformateur, dont le circuit primaire est relié à un générateur d'impulsions unique par l'intermédiaire d'un interrupteur de commande.

Selon une seconde variante, chacun des transformateurs est relié au multiplicateur de tension par un interrupteur commandant l'amorçage.

Avantageusement, le circuit selon l'invention comporte en outre des moyens pour interrompre le convertisseur moyenne tension pendant une durée pendant une durée suffisante pour assurer la désionisation complète de l'arc de la lampe à décharge en fonction, de préférence pendant une durée comprise entre 1 et 10 millisecondes pendant la commutation.

Ce mode de réalisation permet de garantir l'extinction de l'une des lampes une fraction de secondes avant l'allumage de l'autre lampe.

L'invention sera mieux comprise à la lecture de la description qui suit, faisant référence aux dessins annexés où:
- la figure 1 représente un schéma de principe d'une première variante de réalisation du dispositif ;
- la figure 2 représente un schéma de principe d'une seconde variante de réalisation du dispositif.

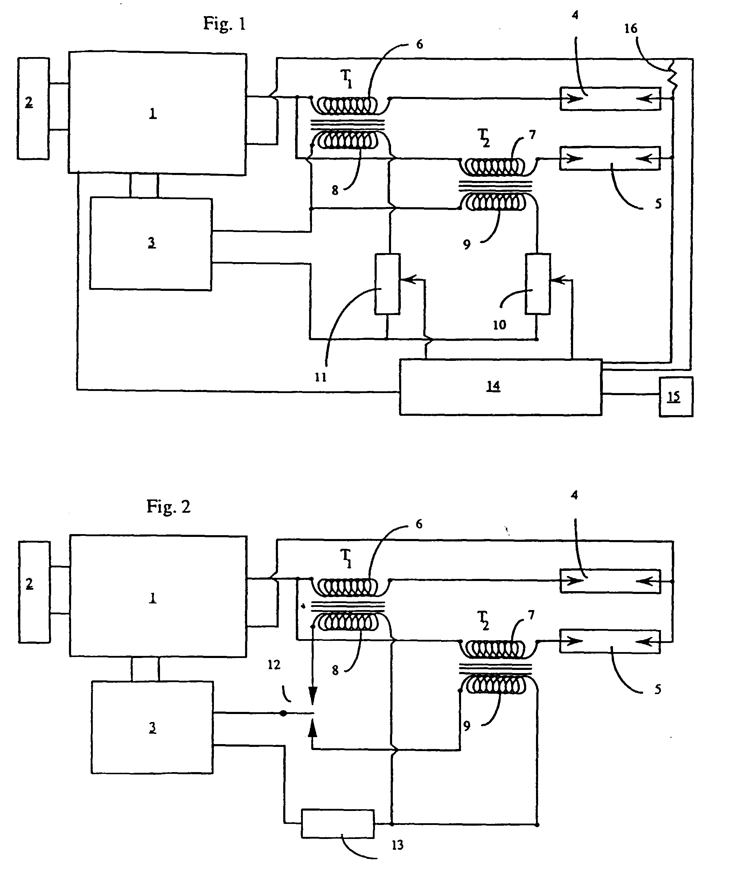

Le circuit représenté en figure 1 comporte un convertisseur moyenne tension (1) relié à une source d'énergie (2), ainsi qu'un multiplicateur de tension (3). Le multiplicateur de tension (3) peut être constitué par un simple redresseur, ou par tout autre circuit connu de l'Homme de Métier.

La lampe à décharge (4) est reliée à la sortie du convertisseur moyenne tension (1) par l'intermédiaire de l'enroulement secondaire (6) d'un transformateur T₁.

La lampe à décharge (5) est reliée à la sortie du convertisseur moyenne tension (1) par l'intermédiaire de l'enroulement secondaire (7) d'un second transformateur T₂.

Les enroulements primaires (8, 9) des transformateurs T₁, T₂ sont reliés au multiplicateur de tension (3) par l'intermédiaire de commutateurs électroniques respectivement (10), (11).

Le fonctionnement du dispositif implique un mode opératoire particulier. En effet, pour certains types de lampes à décharge, la tension présente transitoirement aux bornes de la lampe, après l'amorçage de l'arc est sensiblement supérieure à la tension nominale. A défaut de pouvoir fournir une telle tension pendant quelques centaines de microsecondes, le convertisseur moyenne tension (1) ne parvient pas à déclencher l'allumage de la lampe. Pour garantir l'allumage de la seconde lampe, il est nécessaire d'éteindre préalablement la première lampe, qui, sinon, imposerait une tension trop basse. Pour cela, il suffit d'interrompre le convertisseur moyenne tension pendant quelques millisecondes. La procédure pour passer d'une lampe à l'autre est donc la suivante:
1 - on arrête le convertisseur moyenne tension pendant une durée comprise entre 1 et 10 millisecondes ;
2 - on change la position du sélecteur (12) ;
3 - on remet en servie le convertisseur moyenne tension (1) ;
4- on engendre l'impulsion d'amorçage.

Un circuit de commande (14) commande le fonctionnement et l'interruption du convertisseur moyenne tension (1) ainsi que les commutateurs (10), (11) en fonction des signaux venant du sélecteur code/route (15). Ce circuit de commande (14) reçoit par ailleurs un signal mesuré au bornes d'un shunt (16) permettant de détecter l'extinction ou l'échec de l'allumage de l'une des lampes, et commande l'allumage de l'autre lampe, dans le cas où cette situation ne correspond pas à une action volontaire sur le sélecteur code/route (14).

La figure 2 représente une variante d'exécution, dans laquelle les moyens de commande de l'amorçage sont constitués par un sélecteur de lampe (12) et par un interrupteur de commande (13).

Le sélecteur (12) permet de sélectionner la lampe (4) ou (5) à laquelle doivent être appliquées les impulsions d'amorçage lors de l'activation de l'interrupteur de commande (13).

Cet interrupteur de commande (13) peut être constitué par un éclateur, ou par un circuit mettant en oeuvre un transistor de puissance.

## Revendications

1. Circuit d'alimentation pour un ensemble constitué d'au moins deux lampes à décharge (4, 5), notamment pour la commande code/route de projecteurs pour véhicule, comportant un convertisseur moyenne tension (1) et un générateur d'impulsions pour l'amorçage d'une lampe à décharge, ainsi que des moyens de commutation, caractérisé en ce que chacune des lampes à décharge (4, 5) est reliée à une source d'alimentation moyenne tension (1) unique par l'intermédiaire de l'enroulement secondaire (6, 7) d'un transformateur dont le circuit primaire (8,9) est relié à un multiplicateur de tension (3) unique par l'intermédiaire d'un moyen de sélection (10, 11, 12, 13).

2. Circuit d'alimentation pour un ensemble constitué d'au moins deux lampes à décharge (4, 5) selon la revendication 1, caractérisé en ce que les transformateurs sont reliés au multiplicateur de tension (3) par un sélecteur (12) pour alimenter alternativement l'un ou l'autre desdits transformateurs, et un interrupteur (13) pour commander l'amorçage de la lampe sélectionnée.

3. Circuit d'alimentation pour un ensemble constitué d'au moins deux lampes à décharge (4, 5) selon la revendication 1, caractérisé en ce que chacun des transformateurs est relié au multiplicateur de tension (3) par un interrupteur (10, 11) commandant l'amorçage.

4. Circuit d'alimentation pour un ensemble constitué d'au moins deux lampes à décharge (4, 5) selon l'une quelconque des revendications précédentes, caractérisé en ce que qu'il comporte en outre des moyens (14) pour interrompre le convertisseur moyenne tension (1) pendant une durée comprise entre 1 et 10 millisecondes pendant la commutation.

5. Circuit d'alimentation pour un ensemble constitué d'au moins deux lampes à décharge (4, 5) selon l'une quelconque des revendications 1 à 3, caractérisé en ce que qu'il comporte en outre des moyens (14) pour interrompre le convertisseur moyenne tension (1) pendant une durée suffisante pour assurer la désionisation complète de l'arc de la lampe à décharge en fonction.

6. Circuit d'alimentation pour un ensemble constitué d'au moins deux lampes à décharge (4, 5) selon l'une quelconque des revendications précédentes, caractérisé en ce que qu'il comporte en outre des moyens (14) pour déclencher l'amorçage et l'alimentation de l'une des lampes en cas de détection de l'échec de l'allumage ou de l'extinction inopportune de l'autre lampes.

## Patentansprüche

1. Schaltung zum Betreiben einer Baueinheit aus wenigstens zwei Entladungslampen (4, 5), insbesondere für die Abblend- und Fernlichtbetätigung von Fahrzeugscheinwerfern, bestehend aus einem Mittelspannungswandler (1) und einem Impulsgeber für die Zündung einer Entladungslampe sowie aus Umschaltmitteln, **dadurch gekennzeichnet,** daß jede der Entladungslampen (4, 5) mit einer einzigen Mittelspannungszuleitung (1) über die Sekundärwicklung (6, 7) eines Transformators verbunden ist, dessen Primärkreis (8, 9) über ein Auswahlmittel (10, 11, 12, 13) mit einem einzigen Spannungsvervielfacher (3) verbunden ist.

2. Schaltung zum Betreiben einer Baueinheit aus wenigstens zwei Entladungslampen (4, 5) nach Anspruch 1, **dadurch gekennzeichnet,** daß die Transformatoren mit dem Spannungsvervielfacher (3) über einen Wählschalter (12), um den einen oder den anderen der besagten Transformatoren abwechselnd zu speisen, und über einen Schalter (13) verbunden sind, um die Zündung der ausgewählten Lampe zu steuern.

3. Schaltung zum Betreiben einer Baueinheit aus wenigstens zwei Entladungslampen (4, 5) nach Anspruch 1, **dadurch gekennzeichnet**, daß jeder der Transformatoren über einen Schalter (10, 11) zur Steuerung der Zündung mit dem Spannungsvervielfacher (3) verbunden ist.

4. Schaltung zum Betreiben einer Baueinheit aus wenigstens zwei Entladungslampen (4,5) nach einem der vorangehenden Ansprüche, **dadurch gekennzeichnet,** daß sie außerdem Mittel (14) zum Ausschalten des Mittelspannungswandlers (1) während einer Dauer zwischen 1 und 10 Millisekunden während der Umschaltung umfaßt.

5. Schaltung zum Betreiben einer Baueinheit aus wenigstens zwei Entladungslampen (4, 5) nach einem der Ansprüche 1 bis 3, **dadurch gekennzeichnet,** daß sie außerdem Mittel (14) zum Ausschalten des Mittelspannungswandlers (1) während einer ausreichend langen Dauer umfaßt, um die vollständige Entionisierung des Lichtbogens der eingeschalteten Entladungslampe zu bewirken.

6. Schaltung zum Betreiben einer Baueinheit aus wenigstens zwei Entladungslampen (4,5) nach einem der vorangehenden Ansprüche, **dadurch gekennzeichnet,** daß sie außerdem Mittel (14) umfaßt, um die Zündung und die Speisung einer der Lampen auszulösen, wenn das Scheitern der Einschaltung oder eine unbeabsichtigte Ausschaltung der anderen Lampe erfaßt wird.

## Claims

1. A power supply circuit for an assembly comprising at least two discharge lamps (4, 5), especially for the dipping control of vehicle headlamps, comprising a mean voltage converter (1) and a pulse generator for starting a discharge lamp, together with switching means, characterised in that each of the discharge lamps (4, 5) is connected to a single, common, mean voltage power supply source (1) through the secondary winding (6, 7) of a transformer, the primary circuit (8, 9) of which is connected to a single common voltage multiplier (3) through an interposed selecting means (10, 11, 12, 13).

2. A power supply circuit for an assembly comprising at least two discharge lamps (4, 5) according to Claim 1, characterised in that the transformers are connected to the voltage multiplier (3) through a selector (12) for supplying one or other of the said transformers alternatively, and an interruptor (13) for controlling starting of the selected lamp.

3. A power supply circuit for an assembly comprising at least two discharge lamps (4, 5) according to Claim 1, characterised in that each of the transformers is connected to the voltage multiplier (3) through an interruptor (10, 11) for controlling starting.

4. A power supply circuit for an assembly comprising at least two discharge lamps (4, 5) according to any one of the preceding Claims, characterised in that it further includes means (14) for interrupting the mean voltage converter (1) during a time period of between 1 and 10 milliseconds during switching.

5. A power supply circuit for an assembly comprising at least two discharge lamps (4, 5) according to any one of Claims 1 to 3, characterised in that it further includes means (14) for interrupting the mean voltage converter (1) during a time period sufficiently long to ensure complete deionisation of the arc of the discharge lamp that is in operation.

6. A power supply circuit for an assembly comprising at least two discharge lamps (4, 5) according to any one of the preceding Claims, characterised in that it further includes means (14) for initiating starting and the supply of power to one of the lamps in the event that failure to emit light, or inopportune extinction of the other lamps, is detected.
